# EUROPÄISCHE PATENTSCHRIFT

(11) **EP 3 789 184 B1**
(45) Veröffentlichungstag und Bekanntmachung des Hinweises auf die Patenterteilung: **25.01.2023**
(21) Anmeldenummer: 20177288.6
(22) Anmeldetag: 29.05.2020
(51) Int. Cl.: B29C 64/35, B33Y 40/20

(54) **AUSPACKVORRICHTUNG ZUM AUSPACKEN VON IM 3D-DRUCKVERFAHREN ENTSTANDENEN OBJEKTEN**
UNPACKING DEVICE FOR UNPACKING OBJECTS PRODUCED USING 3D PRINTING
DISPOSITIF DE DÉBALLAGE PERMETTANT DE DÉBALLER DES OBJETS CRÉÉS LORS D'UN PROCÉDÉ D'IMPRESSION 3D

(30) Priorität: 06.09.2019 DE 202019003693 U; 06.09.2019 DE 202019003691 U
(43) Veröffentlichungstag der Anmeldung: 10.03.2021
(73) Patentinhaber: Solukon Ingenieure GbR, 86391 Stadtbergen (DE)
(72) Erfinder: Hartmann, Andreas, 86391 Stadtbergen (DE)
(74) Vertreter: Wiedemann, Markus

(56) Entgegenhaltungen:
- WO-A1-2015/071184
- WO-A1-2019/149305
- DE-A1- 19 937 260
- US-A1- 2009 283 119

## Beschreibung

Die vorliegende Erfindung betrifft eine Auspackvorrichtung zum Auspacken wenigstens eines dreidimensionalen, durch schichtweises Aufbringen und selektives Verfestigen eines pulverförmigen Aufbaumaterials im Rahmen eines Bauprozesses entstandenen Objekts von unverfestigt verbliebenem Aufbaumaterial, gemäß Anspruch 1.

Eine gattungsgemäße Auspackvorrichtung ist aus WO 2015/071184 A1 bekannt. Dort wird zunächst eine Lasersinter- oder Laserschmelzvorrichtung als Bauvorrichtung beschrieben. Zum Aufbauen des Objekts enthält sie eine Baukammer, in der ein nach oben offener Wechselbehälter angeordnet ist, was bedeutet, dass er der Prozesskammer entnommen und wieder in sie eingesetzt werden kann. In dem Wechselbehälter ist ein in einer vertikalen Richtung bewegbarer Träger angeordnet, an dem eine Grundplatte angebracht ist, die den Wechselbehälter nach unten abschließt und damit dessen Boden bildet. Auf der Grundplatte ist eine Bauplattform angebracht sein, auf der das Objekt durch schichtweises Aufbringen und selektives Verfestigen eines pulverförmigen Aufbaumaterials aufgebaut wird. Zusätzlich zur Bauvorrichtung wird eine als Drehvorrichtung ausgebildete Auspackvorrichtung beschrieben. An einer Drehvorrichtung wird der Wechselbehälter nach dem Abschluss des Bauprozesses angebracht und dann der Wechselbehälter um einen Winkel von mindestens 90° aus der aufrechten Position herausgedreht, damit unverfestigt gebliebenes Pulver aus dem Wechselbehälter herausrieseln kann. Zusätzlich ist vorgesehen, dass Vibrationen von außen auf den Wechselbehälter aufgebracht werden, um ein Ablösen von Pulver von dem Objekt zu unterstützen.

Im Einzelnen offenbart WO 2015/071184 A1 Folgendes: Eine Auspackvorrichtung zum Auspacken wenigstens eines dreidimensionalen, durch schichtweises Aufbringen und selektives Verfestigen eines pulverförmigen Aufbaumaterials im Rahmen eines Bauprozesses innerhalb eines mit wenigstens einer Behälteröffnung versehenen topfförmigen Baubehälters entstandenen Objekts von unverfestigt verbliebenem Aufbaumaterial, welche wenigstens Folgendes beinhaltet: Eine Auspackkammer, eine in der Auspackkammer angeordnete Schwenkvorrichtung, eine zur Aufnahme des Baubehälters vorgesehene und ausgebildete, wenigstens einen Deckel aufweisende Aufnahmeeinrichtung, welche durch die Schwenkvorrichtung um wenigstens eine Achse schwenkbar ist, und wobei Deckel an der Aufnahmeeinrichtung gelagert ist, und wobei wenigstens die Schwenkvorrichtung derart ausgebildet und durch eine Steuerung gesteuert ist, dass der Baubehälter mit dem wenigstens einen darin aufgenommenen Objekt, an welchem noch unverfestigt verbliebenes Aufbaumaterial anhaftet, in oder an der Aufnahmeeinrichtung in einer im Wesentlichen aufrechten Lage aufnehmbar ist, in welcher die Behälteröffnung im Wesentlichen nach oben weist, und dass der Baubehälter zwischen der im Wesentlichen aufrechten Lage und einer Kopflage wenigstens einmal um die wenigstens eine Achse schwenkbar ist, in welcher die Behälteröffnung des Baubehälters im Wesentlichen nach unten in Richtung Schwerkraft weist.

US 2009/283119 A1 offenbart ebenfalls eine Vorrichtung zum Entpacken von Objekten, jedoch ist dort keine Aufnahmeeinrichtung zur Handhabung eines Baubehälters gezeigt.

Die Aufgabe der Erfindung darin, eine Auspackvorrichtung zum Auspacken wenigstens eines dreidimensionalen, durch schichtweises Aufbringen und selektives Verfestigen eines pulverförmigen Aufbaumaterials im Rahmen eines Bauprozesses entstandenen Objekts von unverfestigt verbliebenem Aufbaumaterial zur Verfügung zu stellen, welche ein möglichst ökonomisches Auspacken und Reinigen der Objekte ermöglicht.

Diese Aufgabe wird erfindungsgemäß durch die Merkmale von Anspruch 1 gelöst.

### Offenbarung der Erfindung

Das Herstellen des wenigstens einen dreidimensionalen Objekts, wie beispielsweise eines Bauteils oder Modells, welches dann in der erfindungsgemäßen Auspackvorrichtung ausgepackt wird, erfolgt in einem Schichtbauverfahren mit Hilfe von Computerdaten, indem wiederholt dünne Schichten aus losem pulverförmigen Aufbaumaterial auf eine Bauplattform aufgetragen werden und jede einzelne Schicht selektiv zu einem Bauteil- oder Modellquerschnitt verfestigt wird. Die Verfestigung erfolgt beispielsweise chemisch, indem mit Drucktechnologie Tröpfchen aus Kleber selektiv auf festgelegte Bereiche der Schichten aus losem pulverförmigen Aufbaumaterial aufgebracht werden. Alternativ besteht die Möglichkeit, loses pulverförmiges Aufbaumaterial selektiv mit energiereicher (Laser-)Strahlung zu verschmelzen oder zu versintern.

Unter einem Objekt soll daher im Sinne der Erfindung ein zusammen mit der Bauplattform hergestelltes Werkstück oder Bauteil verstanden werden, oder auch das Werkstück oder Bauteil alleine ohne eine Bauplattform.

Das Auspacken oder die Reinigung des wenigstens einen Objekts von losem, nicht verfestigtem pulverförmigem Aufbaumaterial in der Auspackvorrichtung kann das komplette Auspacken des Objekts aus dem Kuchen losen Aufbaumaterials oder Pulvers beinhalten oder aber lediglich ein Abreinigen von Resten von losem Pulver oder Aufbaumaterial von dem wenigstens einen Objekt und optional auch von der

Bauplattform und gegebenenfalls auch von Stützstrukturen, welche nach dem Auspacken noch an dem wenigstens einen Objekt vorhanden sind.

Die Erfindung offenbart eine Auspackvorrichtung zum Auspacken wenigstens eines dreidimensionalen, durch schichtweises Aufbringen und selektives Verfestigen eines pulverförmigen Aufbaumaterials im Rahmen eines Bauprozesses innerhalb eines mit wenigstens einer Behälteröffnung versehenen topfförmigen Baubehälters entstandenen Objekts von unverfestigt verbliebenem Aufbaumaterial, welche wenigstens Folgendes beinhaltet:
a) Eine Auspackkammer,
b) eine in der Auspackkammer angeordnete Schwenkvorrichtung.
c) eine zur Aufnahme des Baubehälters vorgesehene und ausgebildete, wenigstens einen Siebdeckel mit einem Sieb aufweisende Aufnahmeeinrichtung, welche durch die Schwenkvorrichtung um wenigstens eine Achse schwenkbar ist, wobei das Sieb ausgeführt ist, dass zwar unverfestigt verbliebenes Aufbaumaterial nicht aber das wenigstens eine Objekt das Sieb passieren kann, und wobei
d) der Siebdeckel an der Aufnahmeeinrichtung beweglich gelagert ist, und wobei
e) wenigstens die Schwenkvorrichtung und der Siebdeckel derart ausgebildet und durch eine Steuerung gesteuert sind, dass
   e1) der Baubehälter mit dem wenigstens einen darin aufgenommenen Objekt, an welchem noch unverfestigt verbliebenes Aufbaumaterial anhaftet, in oder an der Aufnahmeeinrichtung in einer im Wesentlichen aufrechten Lage aufnehmbar ist, in welcher die Behälteröffnung im Wesentlichen nach oben weist, und dass
   e2) der Siebdeckel zwischen einer ersten Aufnahmestellung, in welcher der Baubehälter in oder an der Aufnahmeeinrichtung in der im Wesentlichen aufrechten Lage aufnehmbar und die Behälteröffnung wenigstens teilweise unverschlossen ist, und einer Arbeitsstellung steuerbar ist, in welcher der Siebdeckel die Behälteröffnung des in oder an der Aufnahmeeinrichtung aufgenommenen Baubehälters verschließt, und dass
   e3) der Baubehälter mit dem in Arbeitsstellung gebrachten Siebdeckel zwischen der im Wesentlichen aufrechten Lage und einer Kopflage wenigstens einmal um die wenigstens eine Achse schwenkbar ist, in welcher die Behälteröffnung des Baubehälters im Wesentlichen nach unten in Richtung Schwerkraft weist und in welcher das wenigstens eine Objekt auf dem Sieb aufliegt, wodurch das Sieb durch unverfestigt verbliebenes und von dem wenigstens einen Objekt abgelöstes Aufbaumaterial passierbar ist.

Da das wenigstens eine Objekt in der Kopflage des Baubehälters auf dem Sieb des Siebdeckel aufliegen kann, kann daher unverfestigt verbliebenes Aufbaumaterial von dem wenigstens einen Objekt infolge oder unter Zuhilfenahme der Schwerkraftwirkung von dem wenigstens einen Objekt durch das Sieb hindurch nach unten abfließen. Andererseits kann das wenigstens eine, insbesondere lose in dem Baubehälter aufgenommene Objekt innerhalb des Baubehälters taumeln, wenn dieser einmal oder mehrmals zwischen der aufrechten Lage und der Kopflage verschwenkt wird, was ein Ablösen des unverfestigt verbliebenen Aufbaumaterials von dem wenigstens einen Objekt fördert. Weil nicht zuletzt in der Kopflage das wenigstens eine Objekt auf dem Sieb bzw. dem Siebdeckel aufliegen kann, kann es von dort leicht aufgenommen werden, um beispielsweise für eine weitere Bearbeitung, insbesondere für eine weitere Reinigung weitertransportiert zu werden.

Insbesondere kann der Siebdeckel durch wenigstens einen Aktuator wie beispielsweise einen Elektromotor rotatorisch und/oder translatorisch antreibbar und dadurch relativ zum Baubehälter und/oder relativ zur Aufnahmeeinrichtung beweglich sein, welcher von der elektronischen Steuerung gesteuert sind. Die Steuerung kann insbesondere ein oder mehrere elektronische Steuergeräte beinhalten, welche mittels einer entsprechenden Software programmiert ist/sind.

Auch kann der Baubehälter mittels einer von der Steuerung koordiniert gesteuerten Spanneinrichtung in der Aufnahmeeinrichtung spann- und entspannbar sein. Eine Fixierung des Baubehälters in der Aufnahmeeinrichtung mittels der Spanneinrichtung findet beispielsweise vorzugsweise spätestens dann statt, wenn sich die Aufnahmeeinrichtung zusammen mit dem daran aufgenommenen Baubehälter in der Kopflage befindet und der Siebdeckel von dem Baubehälter abhoben wird. Dann verhindert die Einspannung des Baubehälters in der Aufnahmeeinrichtung, dass der Baubehälter aus dieser herausrutscht.

Durch die von Anspruch 1 abhängigen Unteransprüche sind bevorzugte Weiterbildungen des ersten Aspekts der Erfindung angegeben.

Für eine verbessertes Auspacken bzw. Reinigen des wenigstens einen Objekts kann (können) die die Schwenkvorrichtung, die Aufnahmeeinrichtung und/oder der Siebdeckel durch eine von der Steuerung gesteuerte Schwingungseinrichtung in Schwingungen versetzbar sein.

Besonders bevorzugt weist die Auspackvorrichtung ein Gehäuse auf, in welchem die Auspackkammer ausgebildet ist. Die Auspackkammer ist insbesondere pulver- und/oder gasdicht ausgeführt, aber durch wenigstens eine beispielsweise durch ein Verschlusselement zu öffnende und verschließbare Öffnung der Auspackkammer können Baubehälter zu- und abgeführt werden.

Gemäß einer Weiterbildung kann die Auspackkammer einen trichterförmigen Boden aufweisen, welcher derart angeordnet ist, dass er das von dem wenigstens einen Objekt infolge der oder unter Zuhilfenahme der Schwerkraftwirkung durch das Sieb hindurch nach unten abfließende unverfestigt verbliebene Aufbaumaterial aufnehmen kann. Dieses dann in dem trichterförmigen Boden befindliche Aufbaumaterial kann dann beispielsweise durch eine im Trichterhals des Bodens angeordnete, verschließbare Öffnung aus der Auspackkammer herausgeführt und für einen weiteren Bauprozess wiederverwendet werden.

In besonders zu bevorzugender Weise kann eine Belüftungseinrichtung vorgesehen sein, durch welche die Auspackkammer durch eine Strömung von Gas, insbesondere von Außenluft durchströmbar ist, welche über eine Zufuhröffnung des Gehäuses von außen in die Auspackkammer zugeführt und mittels einer Ausfuhröffnung des Gehäuses aus der Auspackkammer ausführbar ist, wobei die Belüftungseinrichtung ausgebildet ist, dass das Gas um den in der Schwenkvorrichtung aufgenommenen Baubehälter herumströmt.

Hintergrund dieser Maßnahme ist, dass das wenigstens eine Objekt samt noch anhaftendem Aufbaumaterial zum Schutz vor einem Verzug des wenigstens einen Objekts möglichst langsam abkühlen soll. Ein Abkühlen des wenigstens einen Objekts alleine durch die von ihm verursachte Wärmestrahlung und/oder durch Konvektion dauert jedoch relativ lange. Mittels der oben beschriebenen Belüftungseinrichtung erfolgt demgegenüber eine Abkühlung des wenigstens einen Objekts gezielt. Insbesondere kann die Abkühlung durch eine geeignete Menge an zugeführtem Gas gesteuert werden.

Dabei kann die Ist-Temperatur im Inneren des Baubehälters durch eine Sensoreinrichtung erfasst und ein der Ist-Temperatur entsprechendes Signal in eine elektronische Steuerung zur Auswertung eingesteuert werden. Wenn dann durch die Steuerung festgestellt wird, dass die Ist- Temperatur ausgehend von höheren Temperaturen einen unteren Temperatur-Grenzwert erreicht hat, kann die Steuerung wenigstens einen der nachfolgend beschriebenen Schritte in Bezug auf das weitere Auspacken oder Reinigen des wenigstens einen Objekts von losem Aufbaumaterial veranlassen.

Bevorzugt sind die Auspackkammer und die Strahlkammer durch wenigstens eine Öffnung miteinander verbunden, welche durch ein in eine Öffnungsstellung und in eine Schließstellung bringbares Verschlusselement wie eine Türe, eine Klappe, ein Rolltor oder ein Schott verschließbar ist.

Der Siebdeckel und die Schwenkvorrichtung können derart ausgebildet und durch die Steuerung angesteuert sein, dass in der Kopflage, in welcher das wenigstens eine Objekt auf dem Sieb aufliegt, die Aufnahmeeinrichtung und der Siebdeckel relativ zueinander derart bewegbar sind, dass das wenigstens eine, auf dem Siebdeckel aufliegende Objekt frei zugänglich ist, insbesondere von außerhalb des Baubehälters.

Gemäß einer Weiterbildung kann der Siebdeckel wenigstens teilweise oder vollständig durch das Sieb gebildet werden, so dass unverfestigt verbliebenes, von dem wenigstens einen Objekt abgelöstes und das Sieb passierendes Aufbaumaterial direkt in die Auspackkammer oder in einen in der Auspackkammer angeordneten Behälter wenigstens schwerkraftbedingt abfließt.

Wenigstens schwerkraftbedingt Abfließen bedeutet, dass das Aufbaumaterial wenigstens durch den Einfluss der Schwerkraft abfließt. Unterstützt werden kann das Abfließen durch Schwingungen, in welche das Sieb oder die Aufnahmeeinrichtung versetzt wird (werden).

Auch kann zwischen dem Sieb und einem Deckelboden des Siebdeckels eine Kammer ausgebildet sein, in welche unverfestigt verbliebenes, von dem wenigstens einen Objekt abgelöstes und das Sieb passierendes Aufbaumaterial in der Kopflage des Baubehälters (zunächst) fließt.

Dabei kann der Deckelboden wenigstens eine Absaugöffnung aufweisen, an welcher eine Absaugvorrichtung zum Absaugen des unverfestigt verbliebenen und von dem wenigstens einen Objekt abgelösten Aufbaumaterials aus der Kammer angeschlossen ist.

Gemäß einer weiterbildenden Maßnahme kann die Auspackvorrichtung, welche bevorzugt ebenfalls in dem Gehäuse ausgebildet ist, das auch eine Nachbearbeitungseinrichtung zur Nachbearbeitung (z.B. Nachreinigung) des wenigstens einen Objekts beispielsweise in Form einer hier beispielsweise als Strahlkammer ausgebildeten Nachbearbeitungskammer aufweisen.

In der Nachbearbeitungskammer kann eine wenigstens einen Strahlbehälter aufweisende Strahlvorrichtung angeordnet sein, durch welche wenigstens ein Strahl aus Strahlgut auf das Innere wenigstens eines Strahlbehälters gerichtet werden kann. Der Strahl aus Strahlgut dient insbesondere zum weiteren Auspacken/Reinigen des wenigstens einen Objekts, welches zuvor in den Strahlbehälter transportiert worden ist.

Dabei können die Auspackkammer und die Nachbearbeitungskammer durch wenigstens eine Verbindung miteinander verbunden sind, welche durch ein mittels der Steuerung in eine Öffnungsstellung und in eine Schließstellung bringbares Verschlusselement wie eine Türe, eine Klappe, ein Rolltor oder ein Schott partikel- und/oder gasdicht verschließbar oder öffenbar ist.

Besonders bevorzugt ist eine durch die Steuerung ansteuerbare erste Entladestellung zum Entladen des wenigstens einen, wenigstens teilweise von unverfestigt verbliebenem Aufbaumaterial befreiten Objekts aus dem Baubehälter vorgesehen, in welcher der Siebdeckel die Behälteröffnung des Baubehälters wenigstens teilweise freigibt und in welcher das wenigstens eine Objekt auf dem Sieb des Siebdeckels zumindest zeitweise aufliegt.

In der ersten Entladestellung und in Gebrauchslage der Auspackvorrichtung gesehen kann dann der Siebdeckel eine horizontale oder geneigte Transportfläche derart ausbilden, dass das wenigstens eine auf dem Sieb aufliegende Objekt schwerkraftbedingt und/oder von infolge von wenigstens auf das Sieb aufgebrachter Schwingungen entlang des Siebs in einer Entladerichtung transportierbar ist, welche insbesondere von dem Baubehälter weg weist.

Dabei weist die Entladerichtung insbesondere in die Nachbearbeitungskammer. Das Sieb kann dann in der ersten Entladestellung eine Transportfläche ausbilden, entlang welcher das wenigstens eine Objekt von der Auspackkammer in die Nachbearbeitungskammer transportierbar ist.

Zwischen dem Sieb und der Nachbearbeitungskammer kann aber optional noch wenigstens ein weitere Transporteinrichtung angeordnet sein, durch welche das wenigstens eine Objekt von dem Sieb in die Nachbearbeitungskammer gelangen kann.

Die auf das Sieb aufgebrachten Schwingungen können insbesondere derart ausgebildet sein, dass die Schwingungsamplituden (hauptsächlich) innerhalb der Ebene des Siebs wirken. Dadurch kann ein Transport des wenigstens einen Objekts entlang des Siebs vonstattengehen, auch wenn das Sieb in der ersten Entladestellung eine horizontale oder vom Baubehälter aus gesehen eine ansteigende Transportfläche ausbildet. Im Falle einer vom Baubehälter aus gesehen durch das Sieb gebildeten abfallenden Transportfläche trägt die Wirkung der Schwerkraft zum Transport des wenigstens einen Objekts bei.

Das Sieb hat dann eine vorteilhafte Doppelfunktion, indem es einerseits dafür sorgt, dass das wenigstens eine Objekt von dem Aufbaumaterial getrennt wird, und andererseits als Transportfläche für das wenigstens eine Objekt zum Weitertransport insbesondere in die Nachbearbeitungseinrichtung dient.

Die Nachbearbeitungskammer kann insbesondere eine Strahlkammer beinhalten, in welcher eine wenigstens einen Strahlbehälter aufweisende Strahlvorrichtung angeordnet ist, durch welche wenigstens ein Strahl aus Strahlgut auf das Innere wenigstens eines Strahlbehälters gerichtet werden kann.

Der Strahlbehälter ist vorzugsweise in der Strahlkammer schwenkbar gelagert und kann von einer durch die Steuerung gesteuerten Schwenkeinrichtung um wenigstens eine Achse schwenkbar sein. Diese Achse ist bevorzugt eine horizontale Achse.

Der Strahlbehälter kann dann durch die Steuerung insbesondere in eine zweite Aufnahmestellung schwenkbar sein, in welcher er das wenigstens eine, entlang des Siebs (und optional durch die weitere Transporteinrichtung) transportierte Objekt aufnehmen kann.

Weiterhin kann der Strahlbehälter durch die Steuerung in eine zweite Entladestellung schwenkbar sein, in welcher das wenigstens eine von ihm aufgenommene Objekt aus der Strahlkammer entladbar ist.

Generell kann (können) die Schwenkvorrichtung, die Aufnahmeeinrichtung, der Siebdeckel und/oder das Sieb durch eine von der Steuerung gesteuerte Schwingungseinrichtung in Schwingungen versetzbar sein. Diese Schwingungen tragen zum Ablösen oder Abfließen von unverfestigt verbliebenem Aufbaumaterial bei.

Auch kann der Siebdeckel insbesondere an der Aufnahmeeinrichtung schwenkbar und/oder translatorisch beweglich gelagert und von der Steuerung zur Ausführung einer Schwenk- und/oder Translationsbewegung insbesondere in Bezug zur Aufnahmeeinrichtung und/oder in Bezug zum Baubehälter gesteuert sein.

Insbesondere kann auch die Schwenkvorrichtung derart ausgebildet und durch die Steuerung gesteuert ist, dass die Aufnahmeeinrichtung alleine oder zusammen mit dem aufgenommenen Baubehälter wenigstens einmal eine volle Rotation um eine insbesondere horizontale Achse ausführen kann.

Insbesondere sind die oben beschriebenen Vorgänge und Bewegungen durch die elektronische Steuerung automatisch gesteuert.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig. 1: eine perspektivische Ansicht einer bevorzugten Ausführungsform einer Auspackvorrichtung nach der Erfindung;
- Fig. 2: eine Seitenansicht der Auspackvorrichtung von Fig. 1 in einer Situation, in der ein Baubehälter mit darin aufgenommenen Objekten in eine Auspackkammer und dort in eine Aufnahmeeinrichtung in einer aufrechten Lage geladen wird, wobei sich ein Siebdeckel in einer hochgeklappten ersten Aufnahmestellung befindet;
- Fig. 3: eine Seitenansicht der Auspackvorrichtung von Fig. 1 in einer Situation, in der der Siebdeckel in eine den Baubehälter verschließende Arbeitsstellung gebracht worden ist und die Aufnahmeeinrichtung mit dem darin aufgenommenen Baubehälter durch eine Schwenkvorrichtung von der aufrechten Lage in eine Kopflage verschwenkt wird;
- Fig. 4: eine Seitenansicht der Auspackvorrichtung von Fig. 1 in einer Situation, in der in einer ersten Entladestellung die Objekte auf einem Sieb des Siebdeckels aufliegen und entlang des Siebdeckels in eine Strahltrommel einer Strahlvorrichtung transportiert werden, die in eine zweite Aufnahmestellung verschwenkt worden ist;
- Fig. 5: eine Seitenansicht der Auspackvorrichtung von Fig. 1 in einer Situation, in der durch die Strahlvorrichtung nachbearbeitete Objekte aus der in eine zweite Entladestellung verschwenkten Strahltrommel entnommen werden;
- Fig. 6: eine Schnittdarstellung der Aufnahmeeinrichtung mit einem darin aufgenommenen und gespannten Baubehälter.

### Beschreibung des Ausführungsbeispiels

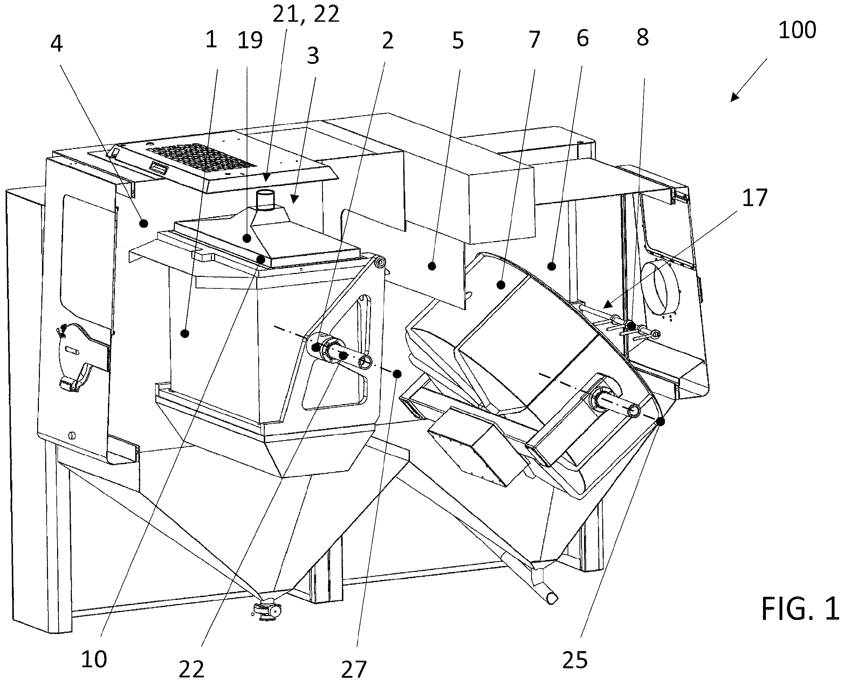

**Fig. 1** zeigt eine perspektivische Ansicht einer bevorzugten Ausführungsform einer Auspackvorrichtung 100 zum Auspacken von dreidimensionalen, durch schichtweises Aufbringen und selektives Verfestigen eines pulverförmigen Aufbaumaterials im Rahmen eines Bauprozesses entstandener Objekte 9 von unverfestigt verbliebenem Aufbaumaterial 11 nach der Erfindung.

Die Objekte 9 sind in einer hier nicht gezeigten Bauvorrichtung, welche eine pulver- und gasdichte Baukammer beinhaltet durch schichtweises Aufbringen und selektives Verfestigen eines pulverförmigen Aufbaumaterials z.B. von Kunststoff- oder Metallpulver auf eine Bauplattform im Rahmen eines Bauprozesses entstanden, welcher in einer Atmosphäre innerhalb der Baukammer stattfindet, welche beispielsweise wenigstens ein inertes Schutzgas enthält. In der Baukammer wird dazu ein Baubehälter 1 angeordnet, in welchem der Bauprozess der Objekte 9 stattfindet und wie er auch dann nach Beendigung des Bauprozesses in der Auspackvorrichtung 100 angeordnet wird, Der Baubehälter 1 ist beispielsweise topfförmig und weist eine Behälteröffnung 15 auf, die im Laufe des Bauprozesses beispielsweise nach oben weist.

Durch Zufuhr von pulverförmigem Material in den Baubehälter 1 und selektive Verfestigung z.B. durch Schweißen, Sintern der jeweils aufgetragenen Schicht beispielsweise mittels Laserstrahl werden die Objekte 9 in dem Baubehälter 1 aufgebaut. Dabei können die Objekte 9 ohne Bauplattform oder mit einer Bauplattform aufgebaut werden und bilden dann mit der Bauplattform (zunächst) jeweils eine Einheit. Später werden dann die Objekte 9 von der Bauplattform getrennt.

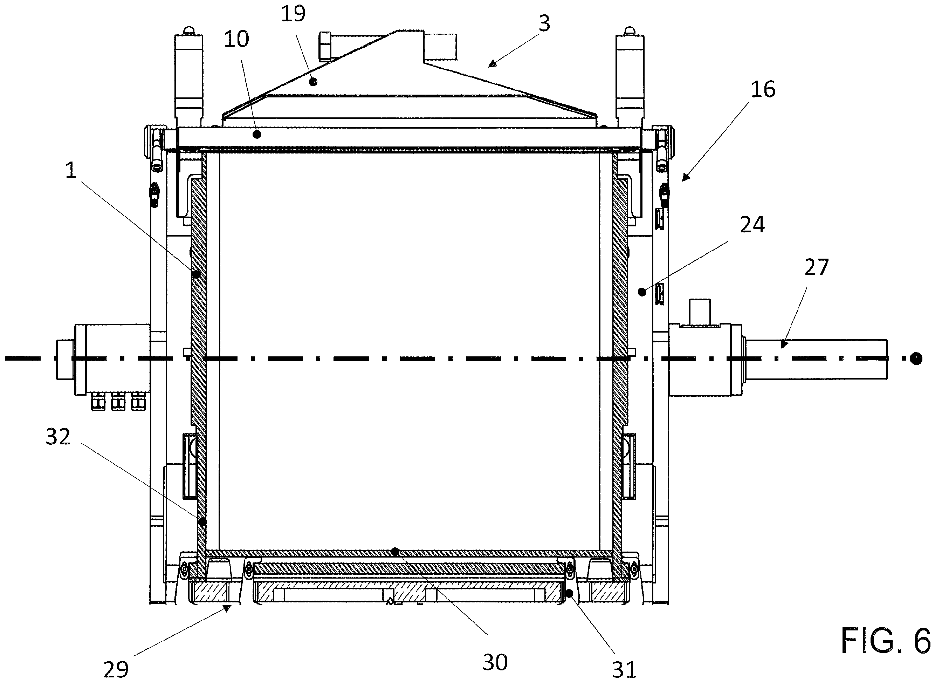

Der Baubehälter wird auch als Wechselbehälter oder Jobbox bezeichnet. In **Fig. 6** ist eine bevorzugte Ausführungsform des Baubehälters 1 gezeigt, welcher beispielsweise einen innerhalb einer Baubehälter-Seitenwandung 32 axial beweglichen Baubehälter-Boden 30 aufweist, welcher beim Bauprozess abhängig vom Baufortschritt ein bestimmtes vertikales Niveau innerhalb der Baubehälter-Seitenwandung 32 einnimmt. Zum Beginn des Bauprozesses befindet sich der Baubehälter-Boden 30 in einer oberen Position nahe der Behälteröffnung 15 und wird dann mit fortschreitendem Bauprozess immer weiter nach unten verschoben, bis er eine unterste Position einnimmt, in welcher er in etwa bündig mit den unteren Rändern der Baubehälter-Seitenwandung 32 ist. Der Baubehälter-Boden 30 kann auch als Bauplattform bezeichnet werden.

Die Auspackvorrichtung 100 beinhaltet ein Gehäuse mit einer Auspackkammer 4, in welcher die Objekte 9 wenigstens teilweise von umgebendem und/oder von in Öffnungen oder Kanälen des Objekts oder der Objekte 9 verbliebenem, nicht verfestigtem pulverförmigem Aufbaumaterial im Rahmen eines Auspackverfahrens ausgepackt bzw. gereinigt werden.

Weiterhin umfasst die Auspackvorrichtung 100 eine Aufnahmeeinrichtung 16 mit einem Siebdeckel 3, welcher ein Sieb 10 aufweist, eine Schwenkvorrichtung 2, ein bewegliches Schott 5 in einer Verbindung zwischen der Auspackkammer 4 und einer beispielsweise als Strahlkammer ausgeführten Nachbearbeitungskammer 6, eine Strahltrommel 7 in der Nachbearbeitungskammer 6, eine Strahlvorrichtung 8, einen Trichterausgang 12 der Strahlkammer 6, sowie eine Entladetüre 13 in dem Gehäuse.

Die Strahltrommel 7 ist in der Strahlkammer 6 bevorzugt um eine erste horizontale Schwenkachse schwenkbar angetrieben angeordnet. Hierzu ist ein durch eine hier nicht gezeigte elektronische Steuerung koordiniert gesteuerter erster Schwenkaktuator vorgesehen. Weiterhin ist die Strahltrommel 7 topfförmig und weist daher eine Strahltrommelöffnung 17 auf.

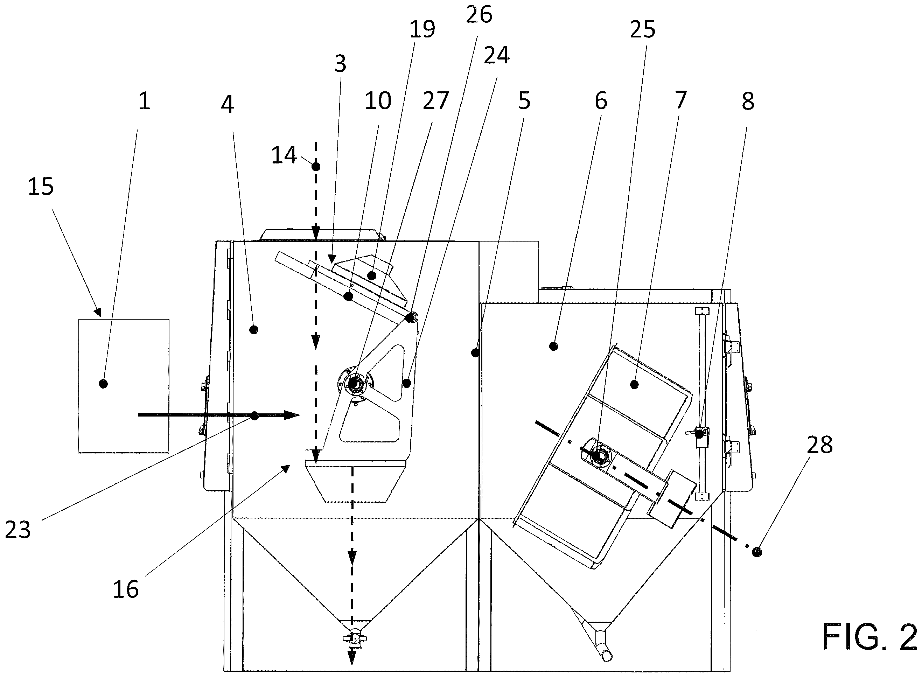

Die Aufnahmeeinrichtung 16 weist neben dem Siebdeckel 3 hier beispielsweise einen durch eine seitliche Korböffnung seitlich offenen und durch eine obere Korböffnung oben offenen Aufnahmekorb 24 auf, in welchem der Baubehälter 1 unter geringem Spiel in einer im Wesentlichen aufrechten Lage aufgenommen werden kann, wobei dann die Behälteröffnung 15 des Baubehälters 1 bevorzugt nach oben weist. Der Transport des Baubehälters 1 in die Auspackkammer 4 und dort in die Aufnahmeeinrichtung 16 erfolgt beispielsweise horizontal in der durch den Pfeil 23 in **Fig. 2** symbolisierten horizontalen Richtung, beispielsweise durch einen Gabelstapler.

Der Siebdeckel 3 und der Aufnahmekorb 24 sind beispielsweise im Bereich der oberen Korböffnung des Aufnahmekorbs 24 um eine zweite horizontale Schwenkachse 26 relativ zueinander schwenkbar gelagert. Für diese Relativbewegung ist ein durch die elektronische Steuerung koordiniert gesteuerter zweiter Schwenkaktuator vorgesehen. Mit anderen Worten kann mittels des zweiten Schwenkaktuators nicht nur der Siebdeckel 3 gegenüber dem stationären Aufnahmekorb 24 sondern auch der Aufnahmekorb 24 gegenüber dem stationären Siebdeckel 3 um die zweite Schwenkachse 26 koordiniert verschwenkt werden.

Alternativ oder zusätzlich könnten der Siebdeckel 3 und der Aufnahmekorb 24 auch translatorische Bewegung relativ zueinander ausführen, um eine erste Aufnahmestellung einzunehmen, in welcher der Baubehälter 1 in den Aufnahmekorb 24 aufgenommen werden kann, sowie wie weiter unten beschrieben eine Arbeitsstellung und eine erste Entladestellung.

**Fig. 2** zeigt die erste Aufnahmestellung, in welcher der Siebdeckel 3 von dem Aufnahmekorb 24 beispielsweise nach oben geklappt ist.

Die Aufnahmeeinrichtung 16 ist insgesamt durch eine Schwenkvorrichtung 2 beispielsweise um eine dritte horizontale Schwenkachse 27 durch Antrieb eines durch die Steuerung koordiniert gesteuerten dritten Schwenkaktuators in beliebige Winkelstellungen zwischen 0 Grad und 360 Grad schwenkbar, wenigstens einmal und vorzugsweise mehrmals hintereinander.

Der Siebdeckel 3 weist hier beispielsweise einen hier beispielsweise pyramidenförmigen Deckelboden 19 und das Sieb 10 auf, wobei zwischen dem Deckelboden 19 und dem Sieb eine leere Kammer 20 ausgebildet wird. Wenn sich daher in der Kammer 22 pulverförmiges Aufbaumaterial befindet, so kann dieses, wenn das Sieb 10 nach unten weist, durch das Sieb 10 hindurch aus der Kammer 20 schwerkraftbedingt abfließen.

Der Deckelboden 19 weist weiterhin bevorzugt an seinem Scheitelpunkt eine Absaugöffnung 21 auf, an welche ein Saugschlauch 22 einer Absaugvorrichtung angeschlossen ist. Der Saugschlauch 22 ist hierzu beispielsweise mit einer Drehdurchführung im Bereich der zweiten Schwenkachse 26 der Schwenkvorrichtung 2 verbunden, wie **Fig. 1** andeutet.

Folglich können hier einerseits der Siebdeckel 3 zusammen mit dem Sieb 10, dem Deckelboden 19, der Kammer 20 und dem Saugschlauch 22 und andererseits der Aufnahmekorb 24 relativ zueinander durch den zweiten Schwenkaktuator um die zweite horizontale Schwenkachse 26 zwischen der ersten Aufnahmestellung und einer Arbeitsstellung schwenkbar angetrieben werden, in welcher der Siebdeckel 3 die Behälteröffnung 15 des in dem Aufnahmekorb 24 aufgenommenen Baubehälters 1 insbesondere pulverdicht verschließt.

Die Begriffe "oben" und "unten" bzw. "aufrecht" im Sinne der hier vorliegenden Beschreibung beziehen sich auf die Gebrauchslage der Auspackvorrichtung 100.

**Fig. 2** zeigt eine Seitenansicht der Auspackvorrichtung 100 von **Fig. 1** in einer Situation, in welcher der Baubehälter 1 mit den darin aufgenommenen Objekten 9 in in die Auspackkammer 4 und dort in die sich in ihrer Ausgangslage befindliche Aufnahmeeinrichtung 16 z.B. über eine Beladetüre der Auspackkammer 4 geladen wird. An den Objekten 9 haftet dann noch bei dem oben beschriebenen Bauprozess unverfestigt verbliebenes Aufbaumaterial.

Hierzu wird der Siebdeckel 3, der an dem Aufnahmekorb 24 beispielsweise schwenkbar gelagert ist, relativ zum Aufnahmekorb 24 beispielsweise nach oben in die erste Aufnahmestellung geklappt. Dann wird der Baubehälter 1 wie durch den Pfeil 23 in **Fig. 2** symbolisiert über die seitliche Aufnahmeöffnung des Aufnahmekorbs 24 in den Aufnahmekorb 24 beispielsweise horizontal eingesetzt und dort beispielsweise durch eine in **Fig. 6** gezeigte Spanneinrichtung 29 der Aufnahmeeinrichtung 16 im Aufnahmekorb 24 gespannt. Die Spanneinrichtung 29 weist hierzu beispielsweise als Greifhaken ausgebildete Greifmittel 31 auf, welche insbesondere am Baubehälter-Boden form- und/oder reibschlüssig angreifen, um den Baubehälter im Aufnahmekorb 24 zu fixieren. Zum Entspannen des Baubehälters 1 aus dem Aufnahmekorb werden dann die Greifmittel 31 von dem Baubehälter-Boden 30 gelöst.

Der Baubehälter 1 befindet sich in dem Aufnahmekorb 16 dann in einer im Wesentlichen aufrechten Lage, in welcher die Behälteröffnung 15 im Wesentlichen nach oben, d.h. gegen die Richtung der Schwerkraft weist. Im Wesentlichen aufrechte Lage bedeutet, dass diese aufrechte Lage auch von einer rein vertikalen Lage um ein bestimmtes Maß abweichen kann.

Dann wird der Siebdeckel 3 derart nach unten in die Arbeitsstellung verschwenkt, dass er die Behälteröffnung 15 des Baubehälters 1 pulverdicht verschließt. Damit dies eintreten kann, weist beispielsweise ein Boden des Aufnahmekorbs 24 von dem in der Arbeitsstellung befindlichen Siebdeckel 3 einen vertikalen Abstand auf, welcher in etwa der Höhe des Baubehälters 1 entspricht. In der Arbeitsstellung des Siebdeckels 3 kann daher loses Aufbaumaterial lediglich von dem Baubehälter 1 durch das im Siebdeckel 3 integrierte Sieb 10 in die Kammer 20 fließen.

Das Verschwenken des Siebdeckels 3 von der ersten Aufnahmestellung in die Arbeitsstellung könnte anstatt durch den mittels der Steuerung gesteuerten zweiten Schwenkaktuator um die zweite Schwenkachse 26 auch händisch, z.B. über Handschuheingriffe an dem Gehäuse erfolgen.

Beim Beladen des Baubehälters 1 in die Auspackkammer 4 ist das Schott 5 zwischen der Auspackkammer 4 und der Nachbearbeitungskammer 5 beispielsweise geschlossen.

Dann wird beispielsweise die Auspackkammer 4 mit einem Gas, vorzugsweise mit Luft 14 durchströmt, so dass dem Baubehälter 1 bzw. den darin aufgenommen Objekten 9 Wärme entzogen wird, beispielsweise solange bis der Baubehälter 1 bzw. die darin aufgenommenen Objekte 9 eine vorbestimmte Temperatur aufweisen. Hierzu wird beispielsweise die in dem Baubehälter 1 herrschende Temperatur durch wenigstens einen Temperatursensor erfasst und der Steuerung gemeldet.

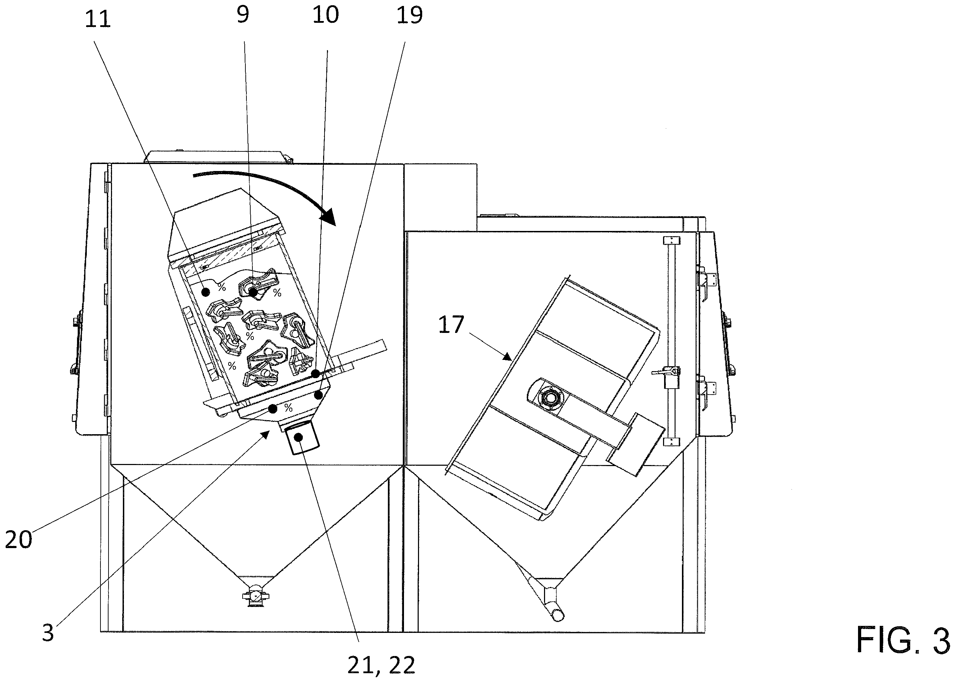

**Fig. 3** zeigt eine Seitenansicht der Auspackvorrichtung 100 von **Fig. 1** in einer Situation, in der der in dem Aufnahmekorb 24 aufgenommene und durch den in der Arbeitsstellung befindlichen Siebdeckel 3 an seiner Behälteröffnung 15 verschlossene Baubehälter 1 durch die Schwenkvorrichtung 2 um die zweite horizontale Schwenkachse 26 derart verschwenkt wird, dass die Behälteröffnung 15 im Wesentlichen nach unten, d.h. in Schwerkraftrichtung weist. Im Wesentlichen nach unten weisend bedeutet, dass von einer rein vertikalen Lage auch gewisse Abweichungen bestehen können, solange eine Schwerkraftkomponente auf das pulverförmige Aufbaumaterial wirken kann.

Beispielsweise schwenkt die Schwenkvorrichtung 2 die Aufnahmevorrichtung 16 mit dem darin aufgenommenen Baubehälter 1 aus der in **Fig. 1** und **Fig. 2** gezeigten aufrechten und insbesondere vertikalen Lage, in der die Behälteröffnung 15 des Baubehälters 1 im Wesentlichen nach oben weist, bevorzugt um 180° in eine Kopf- oder Entleerungslage, in welcher die Behälteröffnung 15 des Baubehälters 1 dann im Wesentlichen nach unten, d.h. in Richtung der Wirkung der Schwerkraft weist. Infolge des Schwenkens des Baubehälters 1 in die Kopflage löst sich wenigstens ein Teil des unverfestigt verbliebenen Aufbaumaterials 11 von den Objekten 9 und fließt dann durch das Sieb 10 hindurch in die Kammer 20, die dann nach unten weist. Weiterhin liegen dann die Objekte 9 auf dem nun nach unten weisenden Sieb 10 auf und bleiben dort liegen.

Parallel zum Verschwenken der Aufnahmeeinrichtung 16 oder davor oder auch danach kann (können) die Aufnahmeeinrichtung 16, der Siebdeckel 3, das Sieb 10 und/oder auch die Schwenkvorrichtung 2 in Schwingung versetzt werden, um das Ablösen von unverfestigt verbliebenem Aufbaumaterial 11 von den Objekten 9 zu erleichtern. Weiterhin wird das dann in die Kammer 20 geflossene unverfestigt verbliebene Aufbaumaterial 11 über den Saugschlauch 22 durch die Absaugeinrichtung aus der Kammer 20 beispielsweise in einen Vorratsbehälter abgesaugt.

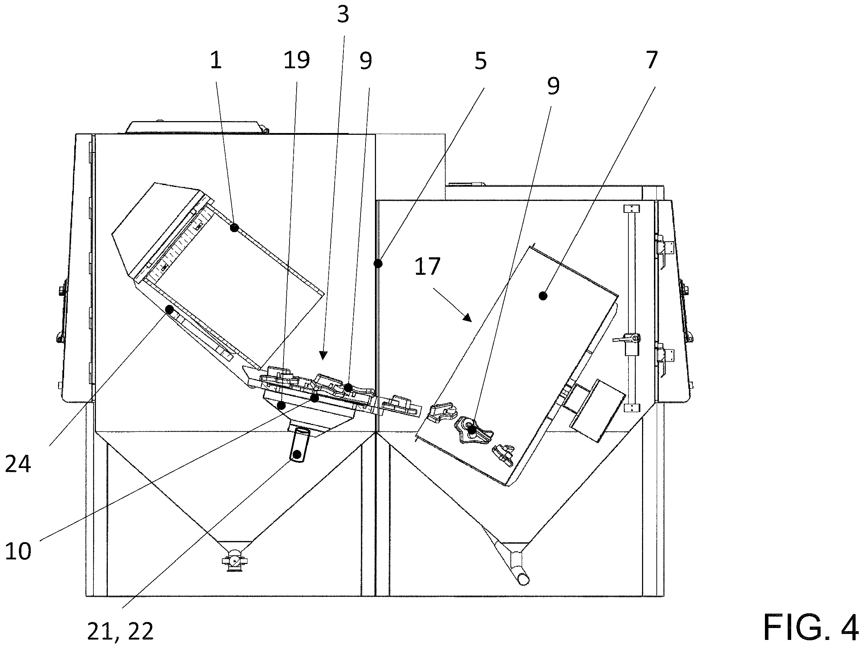

Nach dem wenigstens teilweisen Auspacken der Objekte 9 und bevorzugt, ausgehend von der Situation, in welcher sich der Baubehälter 1 in der Kopflage befindet, werden die Objekte 9 aus dem Baubehälter entladen. Diese Situation zeigt **Fig. 4****.** Dabei wird eine durch die Steuerung ansteuerbare erste Entladestellung zum Entladen der von unverfestigt verbliebenem Aufbaumaterial 11 wenigstens teilweise befreiten Objekte 9 aus dem Baubehälter eingenommen, in welcher der Siebdeckel 3 die Behälteröffnung 15 des Baubehälters 1 wenigstens teilweise freigibt und in welcher die Objekte 9 auf dem Sieb 10 des Siebdeckels 3 zumindest zeitweise aufliegen. Die erste Entladestellung kann beispielsweise dadurch eingenommen werden, dass der Aufnahmekorb 24 relativ zu dem sich im Wesentlichen in der Kopflage befindlichen Siebdeckel 3 durch den zweiten Schwenkaktuator um die zweite Schwenkachse 26 verschwenkt wird, bis der Siebdeckel 3 die Behälteröffnung 15 freigibt. Die Objekte 9 liegen dann frei auf dem Sieb 10 des Siebdeckels 3 auf.

Vorzugsweise werden der Siebdeckel 3 und der Aufnahmekorb 24 durch den zweiten Schwenkaktuator um die zweite Schwenkachse 26 relativ zueinander in eine Lage verschwenkt, in welcher der Siebdeckel 3 eine hier beispielsweise schiefe (hier abschüssige) Transportfläche für die auf ihm aufliegenden Objekte 9 ausbildet, welche dann schwerkraftbedingt und/oder durch den Einfluss von Schwingungen, unter welche beispielsweise das Sieb 10 gesetzt wird, sich entlang des Siebs 10 in einer Entladerichtung bewegen, welche von dem Baubehälter 1 weg und insbesondere in die Nachbearbeitungskammer 6 weist. Das Sieb 10 dient dann als eine Art "Transportrutsche" für die Objekte 9. Zum Transport der Objekte 9 von dem Sieb 10 in die Nachbearbeitungskammer 6 wird das Schott 5 geöffnet. Der Baubehälter 1 wird dann vorzugsweise durch die Spanneinrichtung 26 weiterhin in dem Aufnahmekorb 24 gehalten und dadurch an einem Herausrutschen aus dem Aufnahmekorb 24 gehindert.

In dieser Situation wird die Strahltrommel 7 durch die Steuerung bevorzugt um die erste horizontale Schwenkachse 25 in eine zweite Aufnahmestellung verschwenkt, in welcher die Strahltrommel-Öffnung 17 in Richtung des Siebs 10 weist. Alternativ weist Strahltrommel 7 bereits von Anfang an, d.h. bereits beim Laden des Baubehälters 1 in die Auspackkammer 4 die zweite Aufnahmestellung auf, wie aus **Fig. 2** hervorgeht.

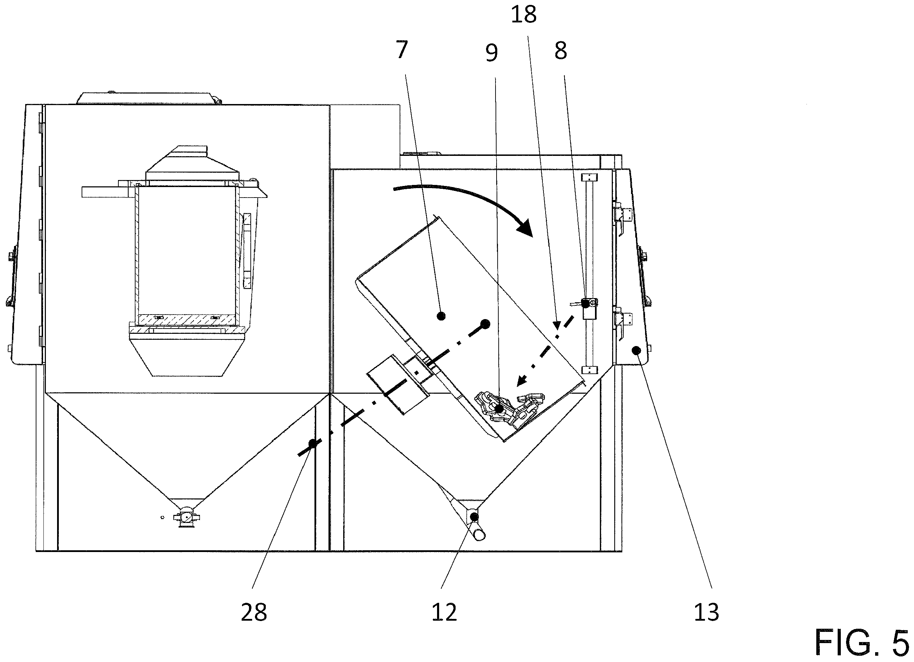

**Fig. 5** zeigt eine Seitenansicht der Auspackvorrichtung 100 von **Fig. 1** in einer Situation, in der die Objekte 9 durch die Strahlvorrichtung 8 in der Strahltrommel 7 mit Strahlpartikeln bestrahlt werden, wodurch eine weitere Reinigung der Objekte 9 von unverfestigt verbliebenem Aufbaumaterial erfolgt. Zum Bestrahlen der Objekte 9 in der Nachbearbeitungskammer 6 wird beispielsweise die Strahltrommel 7 um die erste horizontale Schwenkachse 25 mittels des ersten Schwenkaktuators derart verschwenkt, dass die Strahltrommelöffnung 17 in Richtung der Strahlvorrichtung 8 weist. Die dann eingenommene zum Bestrahlen vorgesehene Stellung der Strahltrommel 7 entspricht dann beispielsweise einer zweiten Entladestellung, in welcher die bereits bestrahlten Objekte 9 der Strahltrommel 7 entnommen werden.

Die Strahlvorrichtung 8 bringt Strahlpartikel, insbesondere Glasperlen aus wenigstens einer Düse unter Druck in wenigstens einem Reinigungsstrahl 18 gebündelt aus und ist beispielsweise als Glasperlstrahlanlage ausgebildet ist. Die Strahlvorrichtung 8 kann beispielsweise in vertikaler Richtung bewegt werden, um beim Schwenken nicht mit der Strahltrommel 7 zu kollidieren.

Die Strahltrommel 7 wird dabei vorzugsweise durch eine Rotationseinrichtung um eine zur ersten horizontalen Schwenkachse 25 senkrechten Achse 28 rotiert, so dass die Bauteile 9 durchmischt werden und sich aneinander reiben, wodurch eine weitere Reinigung von anhaftendem Restpulver erfolgt. Zusätzlich reinigt die Strahlvorrichtung 8 Restpulver bzw. unverfestigt verbliebenes Aufbaumaterial, das noch an der Oberfläche der Objekte 9 haftet, durch den Reinigungsstrahl 18 ab. Die Strahlpartikel des Reinigungsstrahls 18 sammeln sich beispielsweise in einem Trichterausgang 12 der Nachbearbeitungskammer 6 und werden z.B. mit einer Förderspirale in Richtung eines hier nicht gezeigten Siebs gefördert. Das Sieb trennt dann die Strahlpartikel von unverfestigt verbliebenem Aufbaumaterial (Pulverreste) 11 und führt die abgetrennten Strahlpartikel beispielsweise der Strahlvorrichtung 8 wieder zu. Nach dem Strahlprozess können die ausgepackten und gereinigten Objekte 9 der Strahltrommel 7 über eine Entladetüre 13 der Nachbearbeitungskammer 6 entnommen werden. Hierzu verbleibt die Strahltrommel 7 beispielsweise in der zweiten Entladestellung, in welcher auch das Bestrahlen der Objekte 9 in der Strahltrommel 7 erfolgt.

### Bezuqszahlenliste

- 100: Auspackvorrichtung
- 1: Baubehälter
- 2: Schwenkvorrichtung
- 3: Siebdeckel
- 4: Auspackkammer
- 5: Schott
- 6: Nachbearbeitungskammer
- 7: Strahltrommel
- 8: Strahlvorrichtung
- 9: Objekt
- 10: Sieb
- 11: unverfestigt verbliebenes Aufbaumaterial
- 12: Trichterausgang
- 13: Entladetüre
- 14: Gas
- 15: Behälteröffnung
- 16: Aufnahmeeinrichtung
- 17: Strahltrommelöffnung
- 18: Reinigungsstrahl
- 19: Deckelboden
- 20: Kammer
- 21: Absaugöffnung
- 22: Schlauch
- 23: Pfeil
- 24: Aufnahmekorb
- 25: erste Schwenkachse
- 26: zweite Schwenkachse
- 27: dritte Schwenkachse
- 28: Achse
- 29: Spanneinrichtung
- 30: Baubehälter-Boden
- 31: Greifmittel
- 32: Baubehälter-Seitenwandung

## Patentansprüche

1. Auspackvorrichtung (100) zum Auspacken wenigstens eines dreidimensionalen, durch schichtweises Aufbringen und selektives Verfestigen eines pulverförmigen Aufbaumaterials im Rahmen eines Bauprozesses innerhalb eines mit wenigstens einer Behälteröffnung (15) versehenen topfförmigen Baubehälters (1) entstandenen Objekts (9) von unverfestigt verbliebenem Aufbaumaterial (11), welche wenigstens Folgendes beinhaltet:
a) Eine Auspackkammer (4),
b) eine in der Auspackkammer (4) angeordnete Schwenkvorrichtung (2),
c) eine zur Aufnahme des Baubehälters (1) vorgesehene und ausgebildete, wenigstens einen Siebdeckel (3) mit einem Sieb (10) aufweisende Aufnahmeeinrichtung (16), welche durch die Schwenkvorrichtung (2) um wenigstens eine Achse schwenkbar ist, wobei das Sieb (10) ausgeführt ist, dass zwar unverfestigt verbliebenes Aufbaumaterial (11) nicht aber das wenigstens eine Objekt (9) das Sieb (10) passieren kann, und wobei
d) der Siebdeckel (3) an der Aufnahmeeinrichtung (16) beweglich gelagert ist, und wobei
e) wenigstens die Schwenkvorrichtung (2) und der Siebdeckel (3) derart ausgebildet und durch eine Steuerung gesteuert sind, dass
e1) der Baubehälter (1) mit dem wenigstens einen darin aufgenommenen Objekt (9), an welchem noch unverfestigt verbliebenes Aufbaumaterial (11) anhaftet, in oder an der Aufnahmeeinrichtung (16) in einer im Wesentlichen aufrechten Lage aufnehmbar ist, in welcher die Behälteröffnung (15) im Wesentlichen nach oben weist, und dass
e2) der Siebdeckel (3) zwischen einer ersten Aufnahmestellung, in welcher der Baubehälter (1) in oder an der Aufnahmeeinrichtung (16) in der im Wesentlichen aufrechten Lage aufnehmbar und die Behälteröffnung wenigstens teilweise unverschlossen ist, und einer Arbeitsstellung steuerbar ist, in welcher der Siebdeckel (3) die Behälteröffnung (15) des in oder an der Aufnahmeeinrichtung (16) aufgenommenen Baubehälters (1) verschließt, und dass
e3) der Baubehälter (1) mit dem in Arbeitsstellung gebrachten Siebdeckel (3) zwischen der im Wesentlichen aufrechten Lage und einer Kopflage wenigstens einmal um die wenigstens eine Achse schwenkbar ist, in welcher die Behälteröffnung (15) des Baubehälters (1) im Wesentlichen nach unten in Richtung Schwerkraft weist und in welcher das wenigstens eine Objekt (9) auf dem Sieb (10) aufliegt, wodurch das Sieb (10) durch unverfestigt verbliebenes und von dem wenigstens einen Objekt (9) abgelöstes Aufbaumaterial (11) passierbar ist.

2. Auspackvorrichtung nach Anspruch 1, **dadurch gekennzeichnet, dass** der Siebdeckel (3) wenigstens teilweise durch das Sieb (10) gebildet wird, so dass unverfestigt verbliebenes, von dem wenigstens einen Objekt (9) abgelöstes und das Sieb (10) passierendes Aufbaumaterial (11) direkt in die Auspackkammer (4) oder in einen in der Auspackkammer (4) angeordneten Behälter wenigstens schwerkraftbedingt abfließt.

3. Auspackvorrichtung nach Anspruch 1, **dadurch gekennzeichnet, dass** zwischen dem Sieb (10) und einem Deckelboden (19) des Siebdeckels (3) eine Kammer (20) ausgebildet ist, in welche unverfestigt verbliebenes, von dem wenigstens einen Objekt (9) abgelöstes und das Sieb (10) passierendes Aufbaumaterial (11) in der Kopflage des Baubehälters (1) fließt.

4. Auspackvorrichtung nach Anspruch 3, **dadurch gekennzeichnet, dass** der Deckelboden (19) wenigstens eine Absaugöffnung (21) aufweist, an welcher eine Absaugvorrichtung zum Absaugen des unverfestigt verbliebenen und von dem wenigstens einen Objekt (9) abgelösten Aufbaumaterials (11) aus der Kammer (20) angeschlossen ist.

5. Auspackvorrichtung nach einem der vorhergehenden Ansprüche, **dadurch gekennzeichnet, dass** eine Belüftungseinrichtung vorgesehen ist, durch welche die Auspackkammer (4) durch eine Strömung von Gas (14) durchströmbar ist, welche über eine Zufuhröffnung von außen in die Auspackkammer (4) zugeführt und mittels einer Ausfuhröffnung aus der Auspackkammer (4) ausführbar ist, wobei die Belüftungseinrichtung ausgebildet ist, dass das Gas (14) um den in der Schwenkvorrichtung (2) aufgenommenen Baubehälter (1) herumströmt.

6. Auspackvorrichtung nach einem der vorhergehenden Ansprüche, **dadurch gekennzeichnet, dass** sie eine Nachbearbeitungskammer (6) zur Nachbearbeitung des wenigstens einen Objekts (9) aufweist.

7. Auspackvorrichtung nach Anspruch 6, **dadurch gekennzeichnet, dass** die Auspackkammer (4) und die Nachbearbeitungskammer (6) durch wenigstens eine Verbindung miteinander verbunden sind, welche durch ein mittels der Steuerung in eine Öffnungsstellung und in eine Schließstellung bringbares Verschlusselement (5) wie eine Türe, eine Klappe, ein Rolltor oder ein Schott partikel- und/oder gasdicht verschließbar oder öffenbar ist.

8. Auspackvorrichtung nach einem der vorhergehenden Ansprüche, **dadurch gekennzeichnet, dass** eine durch die Steuerung ansteuerbare erste Entladestellung zum Entladen des wenigstens einen, wenigstens teilweise von unverfestigt verbliebenem Aufbaumaterial (11) befreiten Objekts (9) aus dem Baubehälter (1) vorgesehen ist, in welcher der Siebdeckel (3) die Behälteröffnung (15) des Baubehälters (1) wenigstens teilweise freigibt und in welcher das wenigstens eine Objekt (9) auf dem Sieb (10) des Siebdeckels (3) zumindest zeitweise aufliegt.

9. Auspackvorrichtung nach Anspruch 8, **dadurch gekennzeichnet, dass** in der ersten Entladestellung und in Gebrauchslage der Auspackvorrichtung gesehen der Siebdeckel (3) eine horizontale oder geneigte Transportfläche derart ausbildet, dass das wenigstens eine auf dem Sieb (10) aufliegende Objekt (9) schwerkraftbedingt und/oder von infolge von wenigstens auf das Sieb (10) aufgebrachter Schwingungen entlang des Siebs (10) in einer Entladerichtung transportierbar ist, welche insbesondere von dem Baubehälter (1) weg weist.

10. Auspackvorrichtung nach den Ansprüchen 6 und 9, **dadurch gekennzeichnet, dass** die Entladerichtung in die Nachbearbeitungskammer (6) weist.

11. Auspackvorrichtung nach Anspruch 10, **dadurch gekennzeichnet, dass** das Sieb (10) in der ersten Entladestellung eine Transportfläche ausbildet, entlang welcher das wenigstens eine Objekt (9) von der Auspackkammer (4) in die Nachbearbeitungskammer (6) transportierbar ist.

12. Auspackvorrichtung nach einem der Ansprüche 6 bis 11, **dadurch gekennzeichnet, dass** die Nachbearbeitungskammer (6) eine Strahlkammer beinhaltet, in welcher eine wenigstens einen Strahlbehälter (7) aufweisende Strahlvorrichtung (8) angeordnet ist, durch welche wenigstens ein Strahl aus Strahlgut auf das Innere wenigstens eines Strahlbehälters (7) gerichtet werden kann.

13. Auspackvorrichtung nach Anspruch 12, **dadurch gekennzeichnet, dass** der Strahlbehälter (7) schwenkbar ausgebildet und durch die Steuerung in eine zweite Aufnahmestellung schwenkbar ist, in welcher er das wenigstens eine, entlang des Siebs (10) transportierte Objekt (9) aufnehmen kann.

14. Auspackvorrichtung nach Anspruch 12 oder 13, **dadurch gekennzeichnet, dass** der Strahlbehälter (7) durch die Steuerung in eine zweite Entladestellung schwenkbar ist, in welcher das wenigstens eine von ihm aufgenommene Objekt (9) entladbar ist.

15. Auspackvorrichtung nach einem der vorhergehenden Ansprüche, **dadurch gekennzeichnet, dass** die Schwenkvorrichtung (2), die Aufnahmeeinrichtung (16), das Sieb (10) und/oder der Siebdeckel (3) durch eine von der Steuerung gesteuerte Schwingungseinrichtung in Schwingungen versetzbar sind.

16. Auspackvorrichtung nach einem der vorhergehenden Ansprüche, **dadurch gekennzeichnet, dass** der Siebdeckel (3) an der Aufnahmeeinrichtung (16) schwenkbar und/oder translatorisch beweglich gelagert und von der Steuerung zur Ausführung einer Schwenk- und/oder Translationsbewegung gesteuert ist.

17. Auspackvorrichtung nach einem der vorhergehenden Ansprüche, **dadurch gekennzeichnet, dass** die Schwenkvorrichtung (2) derart ausgebildet und durch die Steuerung gesteuert ist, dass die Aufnahmeeinrichtung (16) zusammen wenigstens einmal eine volle Rotation um eine insbesondere horizontale Achse ausführen kann.

18. Auspackvorrichtung nach einem der vorhergehenden Ansprüche, **dadurch gekennzeichnet, dass** die Aufnahmeeinrichtung (16) eine von der Steuerung gesteuerte Spanneinrichtung (19) aufweist, durch welche der Baubehälter (1) an oder in der Aufnahmeeinrichtung (16) spannbar und von dieser entspannbar ist.

19. Auspackvorrichtung nach Anspruch 18, **dadurch gekennzeichnet, dass** der Baubehälter (1) wenigstens in der Kopflage durch die Spanneinrichtung (19) in oder an der Aufnahmeeinrichtung (16) spannbar ist.

## Claims

1. An unpacking device (100) configured for unpacking at least one three-dimensional object (9) by removing non-solidified construction material (11) from the three-dimensional object (9) produced by layered application and selective solidification of a powdery construction material by a construction process performed within a pot shaped construction container (1) that includes at least one container opening (15), the unpacking device comprising:
a) an unpacking chamber (4)
b) a pivoting device (2) arranged in the unpacking chamber (4),
c) a receiving device (16) received in the construction container (1) and including a screen cover (3) including a screen (10), wherein the receiving device is pivotable by a pivoting device (2) about at least one axis, wherein the screen (10) is configured to pass through the non-solidified construction material (11) but not configured to pass through the at least one object (9),
d) wherein the screen cover (3) is movably supported at the receiving device (16),
e) wherein at least the pivot device (2) and the screen cover (3) are configured and controlled by a control,
e1) so that the construction container (1) with the at least one object (9) received therein and adhered by non-solidified construction material (11) is receivable in or at the receiving device (16) in an essentially upright position where the container opening (15) is essentially oriented upward,
e2) so that the screen cover (3) is controllable between a first receiving position in which the construction container is receivable in or at the receiving device (16) in the essentially vertical position and where the container opening is at least partially unclosed and an operating position where the screen cover (3) closes the container opening (15) of the construction container (1) received in or at the receiving device (16),
e3) so that the construction container (1) including the screen cover (3) moved into the operating position is pivotable at least once about the at least one axis between the essentially upright position and an upside down position where the container opening (15) of the construction container (1) is essentially oriented downward following gravity and where the at least one object (9) rests on the screen (10) so that the screen (10) is passible by the non-solidified construction material (11) removed from the at least one object (9).

2. The unpacking device according to claim 1, **characterized in that** the screen cover (3) is at least partially formed by the screen (10) so that the non-solidified construction material (11) removed from the at least one object (9) and passing through the screen (10) runs directly into the unpacking chamber (4) or into a container arranged in the unpacking chamber (4) at least following gravity.

3. The unpacking device according to claim 1, **characterized in that** a chamber (20) if formed between the screen (10) and a cover base (19) of the screen cover (3) so that the non-solidified construction material (11) removed from the at least one object (9) and passed through the screen (10) runs into the chamber (20) in the upside-down position of the construction container (1).

4. The unpacking device according to claim 3, **characterized in that** the cover base (19) includes at least one suction opening (21) where a suction device configured to extract the non-solidified construction material (11) that has been removed from the at least one object (9) from the chamber (20) is connected.

5. The unpacking device according to one of the preceding claims, **characterized in that** a ventilation device is provided through which the unpacking chamber (4) is flowable by a flow of a gas (14) which is externally supplied to the unpacking chamber (4) through a feed opening and exhaustible through an exhaust opening from the unpacking chamber (4), wherein the ventilation device is configured to flow the gas about the construction container (1) received in the pivot device (2).

6. The unpacking device according to any one of the preceding claims, **characterized in that** the unpacking device includes a post processing chamber (6) configured to post process the at least one object (9).

7. A unpacking device according to claim 6, **characterized in that** the unpacking chamber (4) and the post processing chamber (6) are connected with one another by at least one connection that is closable or openable particle and/or gas tight by a closure element (5) configured as a door, flap, rolling door or bulkhead door that is movable into an open position or a closed position by the control.

8. The unpacking device according to one of the preceding claims, **characterized in that** a first unloading position controllable by the control for unloading the at least one object (9) that is at least partially cleaned from the non-solidified construction material (11) from the construction container (1) is provided in which the screen cover (3) at least partially releases the container opening (15) of the construction container (1) and in which the at least one object (9) at least temporarily rests on the screen (10) of the screen cover (3).

9. The unpacking device according to claim 8, **characterized in that** the screen cover (3) forms a horizontal or inclined transport surface in a first unloading position and in the operating position of the unpacking device so that the at least one object (9) resting on the screen (10) is transportable along the screen (10) in an unloading direction following gravity and/or caused by vibrations imparted at least upon the screen (10) wherein the unloading direction is in particular oriented away from the construction container (1).

10. The unpacking device according to claims 6 and 9, **characterized in that** the unloading device is oriented towards the post processing chamber (6).

11. The unpacking device according to claim 10, **characterized in that** the screen (10) forms a transport surface in the first unloading position so that the object (9) is transportable along the transport surface from the unpacking chamber (4) into the post processing chamber (6).

12. The unpacking device according to one of the claims 6 - 11, **characterized in that** the post processing chamber (6) includes a blasting chamber including a blasting device (8) including at least one blasting material container wherein the blasting device is configured to direct at least one jet with blasting material into an interior of the at least one blasting container (7).

13. The unpacking device according to claim 12, **characterized in that** the blasting container (7) is configured pivotable and pivotable by a control into a second receiving position in which the blasting container is configured to receive the at least one object (9) transported along the screen (10).

14. The unpacking device according to claim 12 or 13, **characterized in that** the blasting container (7) is pivotable by a control into a second unloading position in which the at least one object (9) received by the blasting container is unloadable.

15. The unpacking device according to one of the preceding claims, **characterized in that** the pivoting device (2), the receiving device (16), the screen (10) and/or the screen cover (3) is excitable to vibrate by a vibration device controlled by the control.

16. The unpacking device according to one of the preceding claims, **characterized in that** the screen cover (3) is pivotably or movably supported at the receiving device (16) and controlled by the control to perform a pivoting and/or displacing movement.

17. The unpacking device according to one of the preceding claims, **characterized in that** the pivoting device (2) is configured and controlled by the control so that the receiving device (16) is able to perform a full rotation about a particularly horizontal axis at least once.

18. The unpacking device according to one of the preceding claims, **characterized in that** the receiving device (16) includes a clamping device (19) controlled by the control and configured to clamp the construction container (1) at or in the receiving device (16) and unclamp the construction container (1) from the receiving device (16).

19. The unpacking device according to claim 18, **characterized in that** the construction container (1) is clampable at least in the upside down position by the clamping device (19) in or at the receiving device (16).

## Revendications

1. Dispositif pour déballer (100) pour le déballage d'au moins un objet (9) de matériau de construction resté non solidifié, créé par application en couches et solidification sélective d'un matériau de construction tridimensionnel en poudre dans le cadre d'un processus de construction, à l'intérieur d'un conteneur de construction en forme de pot (1) pourvu d'une ouverture de conteneur (15), qui contient au moins les éléments suivants :
a) un compartiment de déballage (4),
b) un dispositif de pivotement (2) placé dans le compartiment de déballage (2),
c) un dispositif de réception (16), prévu et configuré pour recevoir le conteneur de construction (1), qui présente au moins un couvercle à tamis (3) avec un tamis (10), qui peut être pivoté par le dispositif de pivotement (2) autour d'au moins un axe, cependant que le tamis (10) est réalisé de telle manière que du matériau de construction certes resté non solidifié (11) peut passer à travers le tamis (9) mais pas l'au moins un objet (9) et cependant que
d) le couvercle à tamis (3) est positionné mobile sur le dispositif de réception (16) et cependant
e) qu'au moins le dispositif de pivotement (2) et le couvercle à tamis (3) sont configurés et sont commandés par une commande de telle manière que
e1) le conteneur de construction (1) peut être reçu avec l'au moins un objet (9) qui y est logé, sur lequel du matériau de construction resté non solidifié (11) adhère, dans ou sur le dispositif de réception (16) dans une position sensiblement verticale dans laquelle l'ouverture de conteneur (15) est tournée sensiblement vers le haut et que
e2) le couvercle à tamis (3) peut être commandé entre une première position de réception, dans laquelle le conteneur de construction (1) peut être reçu dans ou sur le dispositif de réception (16) dans la position sensiblement verticale et l'ouverture du conteneur est au moins partiellement fermée, et une position de travail dans laquelle le couvercle à tamis (3) ferme l'ouverture de conteneur (15) du conteneur de construction (1) logé dans ou sur le dispositif de réception (16) et que
e3) le conteneur de construction (1) avec le couvercle à tamis (3) posé dans la position de travail peut être pivoté au moins une fois autour de l'au moins un axe entre la position sensiblement verticale et une position de tête dans laquelle l'ouverture de conteneur (15) du conteneur de construction (1) est tournée sensiblement vers le bas en direction de la force de la gravité et dans laquelle un objet (9) repose sur le tamis (10) si bien que le tamis (10) peut être traversé par du matériau de construction (11) resté non solidifié et détaché de l'au moins un objet (9).

2. Dispositif pour déballer selon la revendication 1, **caractérisé en ce que** le couvercle à tamis (3) est formé au moins partiellement par le tamis (10) si bien que du matériau de construction resté non solidifié, détaché d'au moins un objet (9) et le matériau de construction (11) qui passe à travers le tamis (10) s'écoule directement au moins à cause de la force de la gravité dans le compartiment de déballage (4) ou dans un conteneur placé dans le compartiment de déballage (4).

3. Dispositif pour déballer selon la revendication 1, **caractérisé en ce qu'**un compartiment (20) est configuré entre le tamis (10) et un fond de couvercle (19) du couvercle de tamis (3), compartiment dans lequel du matériau de construction (11) resté non solidifié, détaché d'au moins un objet (9) et qui passe à travers le tamis (10) s'écoule dans la position de tête du conteneur de construction (1).

4. Dispositif pour déballer selon la revendication 3, **caractérisé en ce que** le fond de couvercle (19) présente au moins une ouverture d'aspiration (21) à laquelle un dispositif d'aspiration est raccordé pour aspirer le matériau de construction (11) resté non solidifié et détaché d'au moins un objet (9) hors du compartiment (20).

5. Dispositif pour déballer selon l'une des revendications précédentes, **caractérisé en ce qu'**il est prévu un dispositif d'aération par lequel le compartiment de déballage (4) peut être traversé par un flux de gaz (14) qui est amené de l'extérieur dans le compartiment de déballage (4) par l'ouverture d'amenée et qui peut être guidé hors du compartiment de déballage (4) au moyen d'un orifice d'évacuation, cependant que le dispositif d'aération est configuré tel que le gaz (14) s'écoule autour du conteneur de construction logé dans le dispositif de pivotement (2).

6. Dispositif pour déballer selon l'une des revendications précédentes, **caractérisé en ce qu'**il présente un compartiment de traitement ultérieur (6) pour le traitement ultérieur de l'au moins un objet (9).

7. Dispositif pour déballer selon la revendication 6, **caractérisé en ce que** le compartiment de déballage (4) et le compartiment de traitement ultérieur (6) sont reliés l'un à l'autre par au moins un raccordement qui peut être fermé étanche aux particules et/ou au gaz ou ouvert par un élément de fermeture (5) comme une porte, un clapet, un volet roulant ou une cloison étanche qui peut être amené au moyen de la commande dans une position d'ouverture et dans une position de fermeture.

8. Dispositif pour déballer selon l'une des revendications précédentes, **caractérisé en ce qu'**il est prévu une première position de déchargement qui peut être commandée par la commande pour décharger du conteneur de construction (1) l'au moins un objet (9) débarrassé au moins partiellement du matériau de construction (11) resté non solidifié, position dans laquelle le couvercle à tamis (3) dégage au moins partiellement l'ouverture de conteneur (15) du conteneur (1) et dans laquelle l'au moins un objet (9) repose au moins temporairement sur le tamis (10) du couvercle à tamis (3).

9. Dispositif pour déballer selon la revendication 8, **caractérisé en ce que** le couvercle à tamis forme une surface de transport horizontale ou incliné, ceci étant vu dans la première position de déchargement et dans la position d'utilisation du dispositif pour déballer, de telle manière que l'au moins un objet (9) qui repose sur le tamis (10) peut être transporté dans une direction de déchargement qui s'écarte en particulier du conteneur de construction (1), ceci étant dû à la force de la gravité et/ou à la suite d'oscillations appliquées au moins sur le tamis (10).

10. Dispositif pour déballer selon les revendications 6 et 9, **caractérisé en ce que** la direction de déchargement est tournée vers le compartiment de traitement ultérieur (6).

11. Dispositif pour déballer selon la revendication 10, **caractérisé en ce que** le tamis (10) forme, dans la première position de déchargement, une surface de transport le long de laquelle l'au moins un objet (9) peut être transporté du compartiment de déballage (4) au compartiment de traitement ultérieur (6).

12. Dispositif pour déballer selon l'une des revendications 6 à 11, **caractérisé en ce que** le compartiment de traitement ultérieur (6) contient un compartiment de grenaillage dans lequel un dispositif de grenaillage (8) qui présente au moins un conteneur de grenaillage (7) est placé, compartiment à travers lequel au moins un jet de matériau de projection est dirigé sur l'intérieur d'au moins un conteneur de grenaillage (7).

13. Dispositif pour déballer selon la revendication 12, **caractérisé en ce que** le conteneur de grenaillage (7) est formé pivotant et peut être pivoté par la commande dans une seconde position de réception dans laquelle il peut recevoir l'au moins un objet (9) transporté le long du tamis (10).

14. Dispositif pour déballer selon la revendication 12 ou 13, **caractérisé en ce que** le conteneur de grenaillage (7) est pivotant par la commande dans une seconde position de déchargement dans laquelle l'au moins un objet (9) logé par lui peut être déchargé.

15. Dispositif pour déballer selon l'une des revendications précédentes, **caractérisé en ce que** le dispositif de pivotement (2), le dispositif de réception (16), le tamis (10) et/ou le couvercle à tamis (3) peuvent être mis en vibration par un dispositif de vibration commandé par la commande.

16. Dispositif pour déballer selon l'une des revendications précédentes, **caractérisé en ce que** le couvercle à tamis (3) est positionné mobile par pivotement et/ou translation sur le dispositif de réception (16) et est commandé par la commande pour exécuter un mouvement de pivotement et/ou de translation.

17. Dispositif pour déballer selon l'une des revendications précédentes, **caractérisé en ce que** le dispositif de pivotement (2) est configuré et commandé par la commande de telle manière que le dispositif de réception (16) peut exécuter à la fois au moins une rotation complète autour d'un axe en particulier horizontal.

18. Dispositif pour déballer selon l'une des revendications précédentes, **caractérisé en ce que** le dispositif de réception (16) présente un dispositif de serrage (19) commandé par la commande par lequel le conteneur de construction (1) peut être serré à ou dans le dispositif de réception (16) et peut en être desserré.

19. Dispositif pour déballer selon la revendication 12, **caractérisé en ce que** le conteneur de construction (1) peut être serré au moins dans la position de tête par le dispositif de serrage (19) dans ou sur le dispositif de réception (16).
